## Europäisches Patentamt
## European Patent Office
## Office européen des brevets

(19)

(11) Veröffentlichungsnummer: **0 266 753 B1**

(12) **EUROPÄISCHE PATENTSCHRIFT**

(45) Veröffentlichungstag der Patentschrift: 27.02.91

(51) Int. Cl.⁵: **G01N 11/04**

(21) Anmeldenummer: 87116224.4

(22) Anmeldetag: 04.11.87

(54) **Verfahren und Gerät zur Ausführung von die Beurteilung des Fliessverhaltens von Thermoplasten ermöglichenden Messungen.**

(30) Priorität: 05.11.86 DE 3637639

(43) Veröffentlichungstag der Anmeldung:
11.05.88 Patentblatt 88/19

(45) Bekanntmachung des Hinweises auf die
Patenterteilung:
27.02.91 Patentblatt 91/09

(84) Benannte Vertragsstaaten:
BE DE FR GB IT NL

(56) Entgegenhaltungen:
DE-C- 730 398

CHEMISTRY AND INDUSTRY, Band 44, 1. November 1952, Seiten 1069-1072; R. HAYES:
"Two extrusion plastometers for use with polyvinyl chloride"

(73) Patentinhaber: IPT Institut für Prüftechnik Gerätebau GmbH & CO KG
Schulstrasse 3
D-8901 Todtenweis(DE)

(72) Erfinder: Sommer, Friedrich
Schulstrasse 3
D-8901 Todtenweis(DE)
Erfinder: Machaczek, Robert
Schulstrasse 3
D-8901 Todtenweis(DE)

(74) Vertreter: Kleinert, Hans-Siegfried, Dipl. Ing.
Marsopstrasse 24a
D-8000 München 60(DE)

## Beschreibung

Die Erfindung betrifft ein Verfahren und ein Gerät zur Ausführung von die Beurteilung des Fließverhaltens von Thermoplasten unter vorgegebenen Druck- und Temperaturbedingungen ermöglichenden Messungen gemäß dem Oberbegriff des Patentanspruches 1.

Zur Beurteilung des Fließverhaltens von Thermoplasten bedient man sich der Bestimmung des Schmelzindex MFI oder des VolumenFließindex MVI entsprechend DIN 53 735.

Zu diesem Zweck wird in einen heizbaren Prüfzylinder gefülltes Granulat des zu prüfenden Thermoplastes erwärmt und mit einem Druckkolben durch eine Düse im Boden des Prüfzylinders in den freien Raum extrudiert. Als einstellbare Prüfparameter dienen dabei die jeweils vorgegebene Prüftemperatur für das Granulat und die jeweils vorgegebene Belastung des Druckkolbens durch entsprechende Gewichte. Während bei einer Belastung bis zu 5 Kilogramm (1 Kilogramm = 10N) die Gewichte ohne Schwierigkeiten von Hand aufgelegt und ausgewechselt werden können, ist für höhere Belastungen eine mechanische Auflegevorrichtung erforderlich, bei der weitere Gewichte durch Ziehen von Entriegelungsstiften freigebbar und dann durch einen motorischen Antrieb auf den Druckkolben aufsetzbar sind - man siehe z.B. den Prospekt "MFI-Prüfgerät - Modell 1267" der Firma IPT Institut für Prüftechnik Gerätebau GmbH & Co.KG vom 01.07.86.

Die Anzahl der zur Verfügung stehenden unterschiedlichen Gewichte ist dabei eng begrenzt. Auch sind diese nur von Hand in vorgegebenen Kombinationen auslösbar, und während eines Meßvorganges kann die dadurch bedingte Belastung des Druckkolbens nicht geändert werden. Das führt wegen der mit dem Meßvorgang verbundenen zeitlichen Rahmenbedingungen außerdem vielfach zu Schwierigkeiten, wenn der Beginn der am Druckkolben durch Bezugsmarken gekennzeichneten Meßstrecke nicht rechtzeitig erreicht wird.

Gleiches gilt für eine aus CHEMISTRY AND INDUSTRY, 1 November 1952, Band 44, Seiten 1069 bis 1072, bekannte Anordnung, bei der ein einseitig drehbar eingespannter Hebel im vorgegebenen Abstand vom Drehpunkt auf einen Druckkolben einwirkt, wobei die jeweilige Belastung sich aus dem am anderen Ende des Hebels angehängten Gewicht ergibt. Infolge der Hebelwirkung lassen sich die erforderlichen Druckkolbenbelastungen mit kleineren Gewichten erreichen. Jedoch bleibt die Belastung während des Durchlaufens der Meßstrecke nicht konstant, da sich das mit Gewichten belastete Hebelende auf einer Kreisbahn bewegt und damit die wirksame Hebellänge nicht konstant ist.

Andererseits ist aus der DE-C-730 398 ein Verfahren und eine Vorrichtung zur Bestimmung der Plastizität plastischer Werkstoffe bekannt, wobei ein Prüfkörper durch einen mit vorgegebenen Gewichten belasteten und vertikal verschiebbaren Prüfstempel zusammengedrückt wird. Die Belastung des Prüfstempels wird hierbei durch einen Waagebalken herbeigeführt, der um einen festen Drehpunkt schwenkbar und durch ein auf den Waagebalken motorisch verschiebbar angebrachtes Prüfgewicht belastet ist und in einem vorgegebenen seitlichen Abstand von seinem Drehpunkt auf den Prüfstempel einwirkt. Auch hierbei ist die jeweils tatsächliche Belastung des Prüfstempels wegen des seitlich vom Prüfstempel liegenden festen Drehpunktes von der Auslenkung des Waagebalkens aus der Horizontalen abhängig, wenn-gleich nur ein Prüfgewicht erforderlich ist, das durch eine Verschiebung auf dem Waagebalken unterschiedliche Belastungen ermöglicht, so daß bei der Durchführung von mehreren Messungen mit unterschiedlichen Belastungen kein Austausch gegen ein entsprechendes anderes Gewicht erforderlich wird.

Aufgabe der Erfindung ist es, durch ein geeignetes Verfahren und durch ein entsprechend gestaltetes Gerät die Ausführung der gewünschten Messungen dadurch zu erleichtern, daß einerseits eine Änderung der Kolbenbelastung kontinuierlich und auch noch während eines eingeleiteten Meßvorganges durch eine entsprechende Steuerung ohne unhandliche Gewichte möglich ist, andererseits aber die an die Kolbenbelastung gestellten Genauigkeitsanforderungen während des Durchlaufens der Meßstrecke ohne Schwierigkeiten eingehalten werden können.

Diese Aufgabe wird bezüglich des Verfahrens gemäß der Erfindung durch die Merkmale des Patentanspruches 1 gelöst. Ein Gerät zur Durchführung dieses Verfahrens wird durch die Merkmale des Patentanspruchs 7 definiert.

Danach macht die Erfindung ebenfalls vom Prinzip des Waagebalkens Gebrauch, indem ein durch ein verschiebbares Gewicht belasteter Waagebalken auf den Druckkolben einwirkt. Die Belastung kann dabei jederzeit durch einen entsprechenden Antrieb verändert werden. Auch kann das einzige verwendete Prüfgewicht durch die Übersetzung des Waagebalkens klein gehalten werden. Da andererseits die Lage des Prüfgewichts nur dann eine eindeutige Aussage über die damit verbundene tatsächliche Belastung des Druckkolbens ermöglicht, wenn sich der Waagebalken im Gleichgewicht, also in der horizontalen Nullage befindet, ist der Drehpunkt des Waagebalkens nicht fest, sondern in der Höhe verfahrbar, wobei eine Rückkopplung zwischen der jeweils festgestellten Auslenkung des Waagebalkens aus der horizontalen Nullage und der jeweiligen Verfahrgeschwindigkeit des Waagebalkens beim Absenken und/oder der jeweiligen Belastung durch das Prüfgewicht auf dem Waagebalken dafür sorgt, daß der Waagebalken bei einer Auslenkung wieder in die horizontale Nullage gebracht wird.

Dieses Prinzip eröffnet dabei in vorteilhafter Weise verschiedene Möglichkeiten der Steuerung. Ausgehend von den während einer Prüfung auftretenden Geschwindigkeitsdifferenzen zwischen dem Absenken des Druckkolbens und dem Absenken des Waagebalkens kann bei konstanter Lage des Prüfgewichts die Verfahrgeschwindigkeit angepaßt werden. Andererseits kann durch eine Änderung der Kolbenbelastung infolge Verlagerung des Prüfgewichtes eine erreichte Verfahrgeschwindigkeit des Waagebalkens auf Grund der Steuerung durch die Auslenkung des Waagebalkens konstant gehalten werden, da die zunehmende Belastung das Absenken des Druckkolbens beschleunigt und die Absenkgeschwindigkeit so der konstanten Verfahrgeschwindigkeit angepaßt wird. Durch eine zusätzlich steuerbare Verlagerung des Prüfgewichts unabhängig von der Auslenkung des Waagebalkens kann die Verfahrgeschwindigkeit gleichfalls über die Auslenkung beeinflußt und dadurch die Einhaltung zeitlicher Rahmenbedingungen erleichtert werden. Die sich auf Grund dieser Steuerungsmöglichkeiten ergebenden Verfahrensvarianten bei der Durchführung von Messungen sind Gegenstände der Patentansprüche 4 bis 6.

Der prinzipielle Aufbau eines entsprechenden Gerätes gemäß der Erfindung ergibt sich aus Patentanspruch 7, während sich die übrigen Patentansprüche auf Weiterbildungen des Gerätes beziehen. Gegenstand dieser Weiterbildungen ist insbesondere die drehbare Lagerung des Waagebalkens an einem freischwebenden, durch Spannbänder gehaltenen Drehelement, die es ermöglicht, den Waagebalken annähernd reibungsfrei und ausreichend stabilisiert zu lagern und die gewünschten Belastungen für den Druckkolben äußerst genau einzustellen.

Einzelheiten der Erfindung seien nachfolgend anhand von in der Zeichnung dargestellten Ausführungsbeispielen näher erläutert. Im einzelnen zeigen

FIG 1 den prinzipiellen Aufbau eines Prüfgerätes gemäß der Erfindung,

FIG 2 ein Wirkungsschema des Waagebalkens von FIG 1,

FIG 3 eine Ausführungsform der Spannbandaufhängung für den Waagebalken des Geräts von FIG 1,

FIG 4 eine weitere Ausführungsform der Spannbandaufhängung in Anlehnung an die von FIG 3,

FIG 5 eine gegenüber FIG 4 erweiterte Ausführungsform der Spannbandaufhängung und

FIG 6 eine gegenüber FIG 5 erweiterte Ausführungsform der Spannbandaufhängung in seitlicher Ansicht.

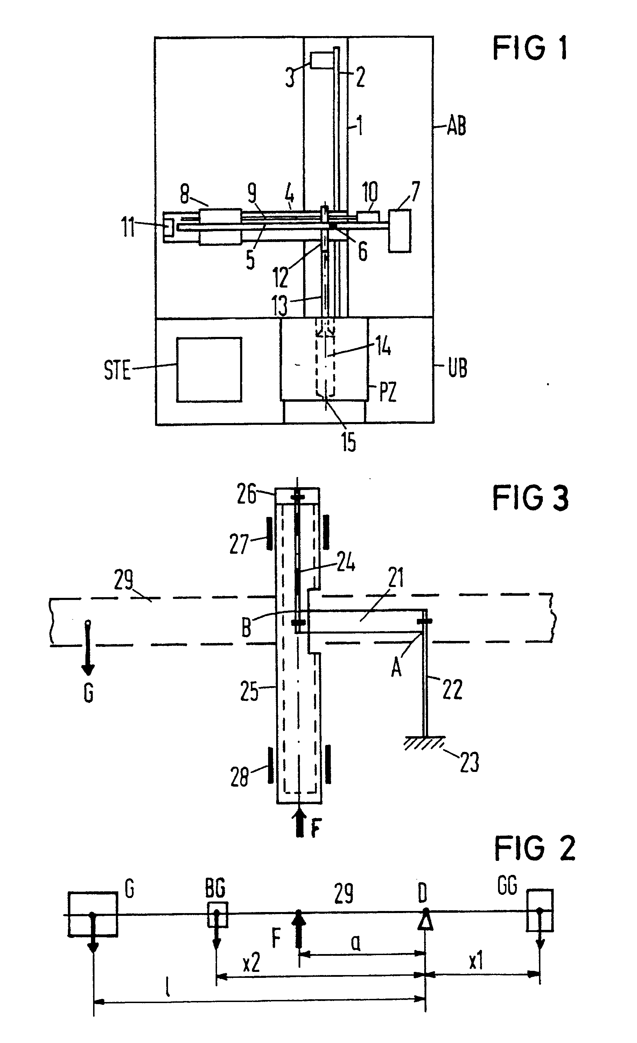

Das in FIG 1 schematisch dargestellte Prüfgerät ähnelt im Aufbau den bekannten Prüfgeräten. In einem Unterbau UB sind der Prüfzylinder PZ mit der Bohrung 14 zur Aufnahme des Granulats und des Druckkolbens 13 sowie die Gerätesteuerung STE mit Bedienungstafel zusammengefaßt. Darüber befindet sich ein Aufbau AB, in dem die Einrichtungen für die Belastung des Druckkolbens 13 untergebracht sind.

Diese Einrichtungen bestehen aus einer Führungssäule 1 mit einem senkrecht verfahrbaren Schlitten 4, der durch einen Elektromotor 3 über eine Spindel 2 angetrieben wird. An dem Schlitten 4 ist mittels einer Aufhängung 6 ein Waagebalken 5 drehbar befestigt, der mit einer nah dem Drehpunkt angebrachten Druckstange 12 für den Druckkolben 13 versehen ist. Auf dem Waagebalken 5 ist ein Prüfgewicht 8 verschiebbar angeordnet, das über eine Spindel 9 durch einen Schrittmotor 10 stetig verstellt werden kann. Um eine unmittelbare Beziehung zwischen dem Prüfgewicht 8 und der auf den Kolben 13 wirkenden Belastung abhängig von den jeweils wirksamen Balkenlängen zu erhalten, wird die Eigenlast des Waagebalkens 5 durch ein Gegengewicht 7 an der über den Drehpunkt hinausgehenden Verlängerung kompensiert, wobei zur Verringerung des Gegengewichts 7 der Schrittmotor 10 ebenfalls in diesem Bereich angebracht ist.

Gegenüber dem Ende des vom Prüfgewicht 8 belasteten Waagebalkens 5 ist in horizontaler Verlängerung an einer konsolenartigen Verlängerung des Schlittens 4 eine Überwachungseinrichtung 11 für die Waagebalkenauslenkung angebracht, die in an sich bekannter Weise, z.B. mittels optischer Sensoren, das Ausmaß der Auslenkung überwacht und in entsprechende Steuersignale umsetzt. Außerdem sind an der Verlängerung des Schlittens die Auslenkung des Waagebalkens 5 nach oben und unten begrenzende Anschläge angebracht, die in der FIG 1 jedoch nicht gezeigt sind.

Die Steigung der Antriebsspindel 9 für das Prüfgewicht 8, die vom Schrittmotor 10 benötigte Schrittzahl, um das Prüfgewicht aus einer Nullstellung heraus über die gesamt mögliche Verschiebeweite auf dem Waagebalken 5 zu verstellen, die Masse des Prüfgewichts 8 und die wirksamen Balkenlängen sind zweckmäßig so aufeinander abgestimmt, daß jedem Schritt des Schrittmotors 10 eine vorgegebene Belastungseinheit, z.B. 1 Gramm, entspricht. Auf diese Weise kann die jeweilige Belastung allein durch die resultierende Gesamtzahl der nach Verlassen der Nullstellung ausgeführten Schritte des Schrittmotors 10 festgestellt werden, bzw. die Einstellung einer vorgegebenen Belastung durch die Ausführung einer entsprechenden Schrittzahl aus der Nullstellung heraus vorgenommen werden.

FIG 2 zeigt das zugehörige Wirkungsschema des Waagebalkens 5 von FIG 1, der in FIG 2 als waagerechte Gerade 29 dargestellt und um den Drehpunkt D nach oben und unten schwenkbar ist. Im Ruhezustand, d.h. im unbelasteten Zustand durch eine Gegenkraft auf den Druckkolben 13 und mit dem Prüfgewicht G in der Nullstellung soll sich der Waagebalken 29 in seiner horizontalen Nullage befinden. Dies ist der Fall, wenn das durch die wirksame Balkeneigenlast BG im Abstand x2 vom Drehpunkt D bewirkte Drehmoment BGx.x2 gleich dem durch das wirksame Gegengewicht GG im Abstand x1 vom Drehpunkt D bewirkte Drehmoment GGx.x1 ist, was in herkömmlicher Weise durch entsprechende Justiermittel einstellbar ist.

Die Kraft F des Kolbens greift im Abstand a vom Drehpunkt D an, während das Prüfgewicht G im beliebigen Abstand 1 vom Drehpunkt D aus wirksam sein kann. Gemäß der Gleichgewichtsbeziehung Gx.1 = Fx.a muß bei konstanter Lage des Prüfgewichts G die Verfahrgeschwindigkeit des Waagebalkens bei einer Auslenkung desselben so beeinflußt werden, daß die Kolbenkraft F die Gleichgewichtsbedingung erfüllt, oder es muß bei konstanter Verfahrgeschwindigkeit und sich ändernder Kolbenkraft F das Prüfgewicht G entsprechend verlagert werden. Andererseits ist aus der geltenden Gleichgewichtsbeziehung ohne weiteres ableitbar, daß bei kleinem Abstand a vom Drehpunkt D die durch das Prüfgewicht G wirksame Kolbenbelastung entsprechend dem Verhältnis 1/a erheblich verstärkt wird. Folglich kann ein erheblich kleineres Prüfgewicht als bei den bekannten Prüfgeräten verwandt werden.

Um den hohen Genauigkeitsanforderungen der DIN 53 735 bezüglich der Prüfbelastungen vollauf zu entsprechen, wurde für die Aufhängung des Waagebalkens eine möglichst reibungsarme Ausführung in Form einer Spannbandaufhängung gewählt, dessen Prinzip in FIG 3 dargestellt ist. Diese Spannbandaufhängung besteht in ihrer einfachsten Ausführungsform aus einem Flachstab als Drehelement 21, dessen Breite gleich dem vorgegebenen Abstand a von FIG 2 ist. An beiden Seiten ist je ein Spannband befestigt, von denen das eine als Haltespannband 22 und das andere als Umlenkspannband 24 wirksam ist. Beide Spannbänder werden dabei in vertikaler Richtung auf Zug beansprucht, wobei das Haltespannband 22 am unten liegenden freien Ende von einem am Schlitten angebrachten Träger als Festlager 23 und das oben liegende freie Ende des Umlenkspannbandes 24 am oberen Kopfende einer innen hohlen Druckstange 25 gehalten wird.

Da eine derartige Anordnung nur dann stabil ist, wenn beide Spannbänder 22 und 24 unter Zugbeanspruchen stehen, ist hierbei eine auf die Druckstange 25 durch den Druckkolben infolge Belastung einwirkende Gegenkraft F erforderlich. Bei nicht wirksamer Gegenkraft muß daher die Druckstange 25 durch eine gesonderte Halterung am Schlitten abgefangen werden, damit sie nicht nach unten wegrutschen kann und das Halteband 22 durch den Waagebalken übermäßig gestaucht wird.

Bei wirksamer Gegenkraft F des Kolbens auf die Druckstange 25 bewirkt der durch das Prüfgewicht G belastete Waagebalken 29 eine Drehbewegung um die rechte, durch das Haltespannband 22 gehaltene Kante des Flachstabes als Drehelement 21, wobei die Richtung der Drehung durch das resultierende Drehmoment am Waagebalken bestimmt wird.

In beiden Drehrichtungen werden dabei die Spannbänder 22 und 24 auf Biegung beansprucht, wobei insbesondere eine Drehung entgegen dem Uhrzeigersinn im vorliegenden Falle bei Flachstäben größerer Dicke an den mit A und B bezeichneten Ecken bleibende Verformungen verursachen kann. Außerdem vergrößert sich mit zunehmender Dicke bei Drehung des Drehelementes 21 der wirksame Abstand a, so daß die Einstellgenauigkeit der Kolbenbelastung durch das Prüfgewicht beeinträchtigt wird. Bei einem Flachstab als Drehelement sollte daher die Dicke nicht sehr groß sein. Andererseits kann die Biegebeanspruchung und die Gefahr bleibender Verformung an den Ecken A und B wesentlich verringert werden, wenn man diese Ecken durch entsprechende Formgebung abflacht.

Um weiterhin zu verhindern, daß die Druckstange 25 bei einer Drehung des Drehelementes 21 mit dem daran befestigten Waagebalken 29 sich ebenfalls aus der Vertikalen herausdreht und dadurch die Belastungsgenauigkeit beeinflußt, wird die Druckstange 25 oben und unten durch reibungsarme Linear-Kugellager 27 und 28 geführt.

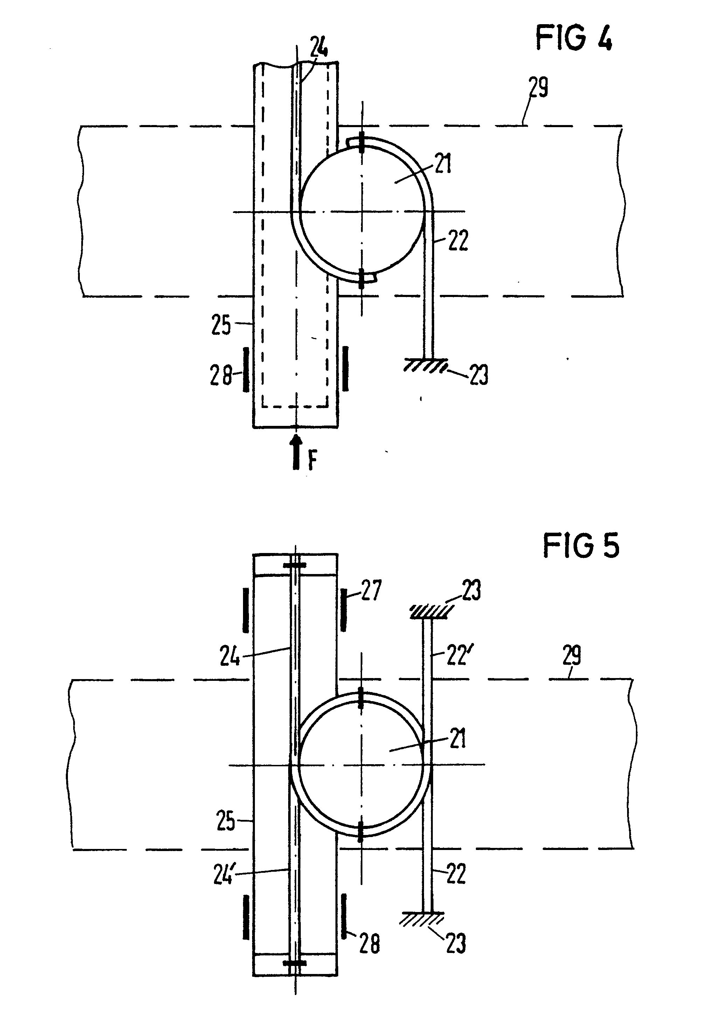

Die mit einem Flachstab als Drehelement verbundenen Probleme entfallen dagegen weitgehendst, wenn wie beim Ausführungsbeispiel gemäß FIG 4 als Drehelement 21 ein Rundstab verwendet wird, dessen Durchmesser dem vorgegebenen Abstand a von FIG 2 entspricht. Die Befestigung der Spannbänder erfolgt in diesem Falle nicht seitlich, sondern zweckmäßig an der Ober- bzw. Unterseite, wie gezeigt. Bei einer Drehung des Rundstabes wird in diesem Falle ein fast reibungsfreies Abrollen entlang der Spannbänder 22 und 23 bewirkt. Im übrigen entspricht die Anordnung von FIG 4 der von FIG 3.

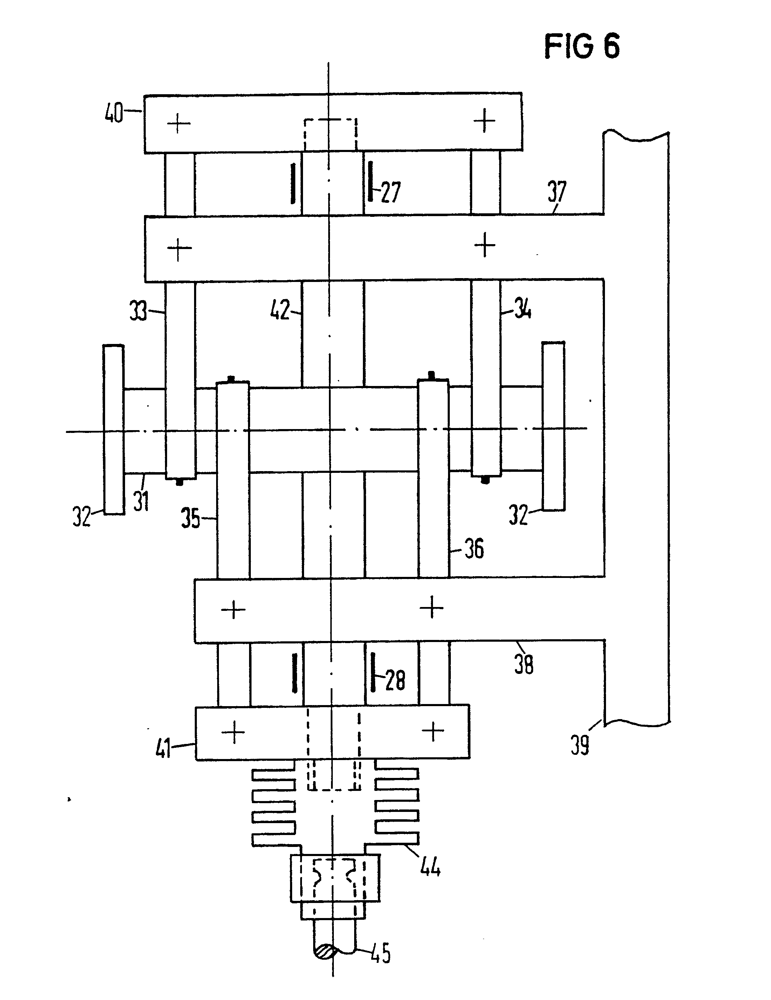

Bei dem in Anlehnung an das Ausführungsbeispiel von FIG 4 gestalteten Ausführungsbeispiel gemäß FIG 5 sind jeweils zwei Haltespannbänder 22 und 22' und zwei Umlenkspannbänder 24 und 24'vorgesehen, die jeweils spiegelbildlich zur Längsachse des Waagebalkens und auf dem Rundstab 21 nebeneinanderliegend angeordnet sind. Zusätzlich zur Anordnung von FIG 4 ist also das Haltespannband 22' und das Umlenkspannband 24' vorgesehen, wobei das zweite Umlenkspannband 24' vom unteren Kopfende der Druckstange 25 gehalten wird. Eine derartige Aufhängung kann daher nicht nur Zugkräfte, sondern auch Druckkräfte aufnehmen. Insbesondere ist zur Stabilisierung keine fortdauernde Gegenkraft des Druckkolbens auf die Druckstange 25 erforderlich, und die sonst erforderliche Abfanghalterung kann entfallen. Die beiden Spannbandgarnituren, bestehend aus dem Haltespannband 22 und dem Umlenkspannband 24 einerseits sowie dem Haltespannband 22' und dem Umlenkspannband 24' andererseits, können im vorliegenden Fall entsprechend der Darstellung von FIG 5 durch zwei einteilige Spannbänder ersetzt werden, indem das eine Spannband das Haltespannband 22' und das Umlenkspannband 24 und das andere Spannband das Haltespannband 22 und das Umlenkspannband 24' in sich vereinigt. Beide Spannbänder umschließen das Drehelement 21 dabei halbkreisförmig anliegend, und beide Spannbänder sind auf dem Rundstab nebeneinanderliegend angeordnet, so daß auch eine bessere Stabilisierung des Waagebalkens gegen Auslenkungen in der horizontalen Ebene gegeben ist. Trotz der freitragenden Aufhängung der Druckstange 25 sind auch in diesem Falle die vertikalen Führungen 27 und 28 notwendig.

FIG 6 zeigt schließlich eine Ausführungsform, bei der die in FIG 5 gezeigte Spannbandaufhängung doppelt vorgesehen ist, aus seitlicher Sicht in Längsrichtung des Waagebalkens, der aus zwei Trägern 32 besteht, die an je einer Stirnseite des als Rundstab ausgebildeten Drehelementes 31 starr befestigt sind. Das Drehelement 31 wird von insgesamt vier Spannbändern 33 bis 36 gehalten, die symmetrisch zu beiden Seiten der Mittelachse des Waagebalkens angeordnet sind. Die oberen Spannbänder 33 und 34 sind jeweils mit ihrem einen freien Ende an einem oberen gemeinsamen Trägersteg 37 der Schlittenplatte 39 als Festlager und mit ihrem anderen freien Ende an einem gemeinsamen oberen Haltesteg 40 befestigt. In gleicher Weise sind die unteren Spannbänder 35 und 36 jeweils mit ihrem einen freien Ende an einem unteren gemeinsamen Trägersteg 38 der Schlittenplatte 39 und mit dem anderen freien Ende an einem unteren gemeinsamen Haltesteg 41 befestigt. Weiterhin sind beide Haltestege 40 und 41 durch einen die Druckstange bildenden und mittig angeordneten Stützstab 42 gegeneinander starr abgestützt und gesichert, wobei das Drehelement 31 im Bereich des Stützstabes 42, um freien Raum für diesen zu schaffen, eine Ausnehmung aufweist, die gestrichelt angedeutet ist. Außerdem ist der Stützstab 42 durch Führungen 27 und 28 in Form von Linear-Kugellagern gesichert. Am unteren, den unteren Haltesteg 41 durchdringenden Ende des Stützstabes 42 kann dann, wie angedeutet, ein Aufnahmekopf 44 mit Thermobremse befestigt sein, in den das obere Ende 45 der Kolbenstange des Druckkolbens eingesteckt wird.

Mit dem vorangehend beschriebenen Prüfgerät ist es also möglich, die Belastung des Druckkolbens 15 (FIG 1) durch Verlagerung des Prüfgewichts 8 auf dem in der Höhe verfahrbaren Waagebalken 5 beliebig einzustellen und die Einstellung auch während einer laufenden Messung zu ändern, wobei abhängig vom Ablauf des gewählten Meßvorganges die Verlagerung des Prüfgewichts automatisch von der jeweiligen Auslenkung des Waagebalkens gesteuert oder durch die Steuerung STE direkt veranlaßt werden kann. Analoges gilt für die Steuerung der Verfahrgeschwindigkeit des Waagebalkens 5 durch den Antriebsmotor 3.

Auf diese Weise kann mit demselben Gerät nicht nur eine Bestimmung des Schmelzindex MFI oder des Volumen-Fließindex MVI durch Messung des Weg/Zeit-Verhältnisses vorgenommen werden, sondern auch das Gewicht/Zeit-Verhältnis zwecks Beurteilung weiterer Eigenschaften des zu prüfenden Thermoplastes gemessen werden.

Auch ist es durch entsprechende Ausbildung der den Arbeitsablauf steuernden Steuereinrichtung STE abhängig von der Bereitstellung der notwendigen Parameter ohne weiteres möglich, das Verfahren des Waagebalkens 5 aus einer oberen Nullstellung vor Aufsetzen des Druckkolbens auf das Granulat und bis zum Erreichen der für eine Prüfung maßgebenden Meßstrecke am Druckkolben so zu steuern, daß abhängig vom gegebenen Füllzustand des Prüfzylinders PZ mit Granulat der Beginn der Meßstrecke zu einem vorgegebenen Zeitpunkt nach Verlassen der Höhennullstellung erreicht wird.

Hierzu ist es beispielsweise erforderlich, daß der Antrieb des Verfahrschlittens in an sich bekannter Weise mit die jeweils verfahrene Wegstrecke bestimmenden Einrichtungen gekoppelt ist. Aus der beim Aufsetzen des Druckkolbens auf das Granulat zurückgelegten Wegstrecke und der Füllstandshöhe kann die Steuerung STE dann z.B. die bis zum Beginn der Meßstrecke zurückzulegende Wegstrecke und damit aus der augenblicklichen Verfahrgeschwindigkeit die noch benötigte Zeit ermitteln. Aus der Relation zwischen dieser benötigten Zeit und dem Rest der vorgegebenen Zeitspanne kann dann eine Änderung der Verfahrgeschwindigkeit über die Auslenkung des Waagebalkens durch direkt gesteuerte Verlagerung des Prüfgewichts in der einen oder anderen Richtung abgeleitet werden, bis durch weitere Messungen die erforderliche Verfahrgeschwindigkeit erreicht ist.

Derartige Steuereinrichtungen, die abhängig von den verschiedenen geforderten Verfahrensabläufen die verschiedenen Parameter auswerten und daraus abgeleitete Stellsignale liefern, können in herkömmlicher Weise realisiert werden.

**Ansprüche**

1. Verfahren zur Ausführung von die Beurteilung des Fließverhaltens von Thermoplasten unter vorgegebenen Druck- und Temperaturbedingungen ermöglichenden Messungen, wobei in einen senkrecht stehenden, heizbaren Prüfzylinder (PZ) gefülltes Granulat des zu prüfenden Thermoplastes durch einen mit vorgegebenen Gewichten belasteten Druckkolben (13) durch eine Düse (15) am unteren Boden des Prüfzylinders (PZ) in den freien Raum extrudiert wird, **dadurch gekennzeichnet,** daß die Belastung des Druckkolbens (13) mit einem vorgegebenen Gewicht durch Verfahren eines in der Höhe verfahrbaren Waagebalken (5) herbeigeführt wird, der um einen Drehpunkt schwenkbar und durch ein auf dem Waagebalken (5) verschiebbar angebrachtes Prüfgewicht (8) belastet ist und der in einem fest vorgegebenen Abstand von seinem Drehpunkt auf den Druckkolben (13) einwirkt, wobei die auf den Druckkolben (13) einwirkende Masse von der Lage des Prüfgewichtes (8) auf dem Waagebalken (5) abhängig ist, daß die Auslenkung des Waagebalkens (5) aus der horizontalen Nullage fortlaufend überwacht wird und daß abhängig vom Ausmaß der jeweils festgestellten Auslenkung des Waagebalkens (5) die Verfahrgeschwindigkeit beim Absenken des Waagebalkens (5) geändert und/oder das Prüfgewicht (8) verlagert wird, um den vom Druckkolben (13) belasteten Waagebalken (5) in die horizontale Nullage zu bringen.

2. Verfahren nach Anspruch 1, **dadurch gekennzeichnet,** daß durch Unterschiede zwischen der jeweiligen Verfahrgeschwindigkeit des Waagebalkens (5) und der jeweiligen prüfungsbedingten Absenkgeschwindigkeit des Druckkolbens (13) während eines Extrudiervorganges bedingte Auslenkungen des Waagebalkens (5) bei konstant gehaltener Lage des Prüfgewichts (8) auf dem Waagebalken (5) eine Änderung der Verfahrgeschwindigkeit und bei konstant gehaltener Verfahrgeschwindigkeit eine Verlagerung des Prüfgewichts (8) bewirken.

3. Verfahren nach Anspruch 1 oder 2, **dadurch gekennzeichnet,** daß die Verfahrgeschwindigkeit des Waagebalkens (5) auch indirekt durch eine unabhängig von der Auslenkung des Waagebalkens steuerbare Verlagerung des Prüfgewichts (8) beeinflußt wird.

4. Verfahren nach Anspruch 3, **dadurch gekennzeichnet,** daß die von einer Höhennullstellung des verfahrbaren Waagebalkens (5) ausgehend zurückgelegte Wegstrecke fortlaufend überwacht wird, und daß abhängig von der Füllhöhe des Prüfzylinders (PZ) und der bis zum Beginn der vorgegebenen Meßstrecke zurückzulegenden Wegstrecke die Verfahrgeschwindigkeit des Waagebalkens (5) durch Verlagerung des Prüfgewichtes (8) so beeinflußt wird, daß der Beginn der vorgegebenen Meßstrecke zu einem vorgegebenen Zeitpunkt nach Start des Waagebalkens (5) aus der Höhennullstellung erreicht wird.

5. Verfahren nach Anspruch 4, **dadurch gekennzeichnet,** daß zur Bestimmung des Schmelzindex (MFI) oder des Volumen-Fließindex (MVI) das Prüfgewicht (8) mit Erreichen des Beginns der vorgegebenen Meßstrecke in die die vorgegebene Kolbenbelastung bewirkende Lage gebracht wird und danach das jeweilige Weg/Zeit-Verhältnis gemessen wird.

6. Verfahren nach Anspruch 4, **dadurch gekennzeichnet,** daß mit Erreichen des Beginns der vorgegebenen Meßstrecke die Verfahrgeschwindigkeit entsprechend einem vorgegebenen Wert konstant gehalten und das jeweilige Gewichts/Weg-Verhältnis gemessen wird.

7. Gerät zur Durchführung der Verfahren nach einem der Ansprüche 1 bis 6, **gekennzeichnet**
- durch eine oberhalb des Prüfzylinders (PZ) angebrachte Führungssäule (1) mit in der Höhe stetig verfahrbarem Schlitten (4),
- durch Einrichtungen (2,3) zum Verfahren des Schlittens (4),
- durch einem am Schlitten (4) drehbar aufgehängten Waagebalken (5) mit einer gegenüber der Achsenmitte von Prüfzylinder (PZ) und Druckkolben (13) in einem fest vorgegebenen Abstand versetzt liegenden Drehachse,
- durch ein auf dem Waagebalken verschiebbar angebrachtes Prüfgewicht (8), das den Waagebalken (5) belastet und ihn dadurch auf den extrudierenden Druckkolben (13) drückt,
- durch Einrichtungen (9,10) zum Verlagern des Prüfgewichts (8) zwecks Änderung der den Druckkolben (13) belastenden Masse,
- durch Einrichtungen (11) zur Überwachung der Auslenkung des Waagebalkens (5) aus der horizontalten Nullage und zur wahlweisen Steuerung der Einrichtungen (2,3) zum Verfahren des Schlittens (4) und/oder der Einrichtungen (9,10) zum Verlagern des Prüfgewichtes (8) abhängig von der jeweils festgestellten Auslenkung des Waagebalkens (5).

8. Gerät nach Anspruch 7, **dadurch gekennzeichnet,** daß zur Begrenzung der Ausschläge des Waagebalkens (5) nach oben und unten Anschläge vorgesehen sind.

9. Gerät nach Anspruch 7 oder 8, **dadurch gekennzeichnet,** daß die Einrichtungen (9,10) zum Verschieben des Prüfgewichtes (8) auf dem Waagebalken (5) aus einem Schrittmotor (10) und einer Antriebsspindel (9) mit geringer Steigung besteht und daß die Steigung der Antriebsspindel (9), die Anzahl der Schritte für die volle Verschiebeweite des Prüfgewichts (8), die Masse des Prüfgewichts (8) und die wirksamen Balkenlängen (a,1) so aufeinander abgestimmt sind, daß je Schritt des Schrittmotors (10) die Belastung des Druckkolbens (13) um eine vorgegebene Masseeinheit (z.B. 1 Gramm) verändert wird.

10. Gerät nach einem der Ansprüche 7 bis 9, **dadurch gekennzeichnet,** daß wenigstens zum teilweisen Ausgleich der Eigenlast des Waagebalkens (5) ein Gegengewicht (7) am Waagebalken (5) angebracht ist.

11. Gerät nach einem der Ansprüche 7 bis 10, **dadurch gekennzeichnet,** daß der Waagebalken (5) an einem durch Spannbänder (22,24) gehaltenen, frei schwebenden Drehelementen (21) befestigt ist.

12. Gerät nach Anspruch 11, **dadurch gekennzeichnet,** daß das Drehelement (21) von wenigstens einem Haltespannband (22) und einem Umlenkspannband (24) gehalten wird, die beide in vertikaler Richtung beansprucht werden und mit einem vorgegebenen horizontalen Abstand (a) am Drehelement (21) befestigt sind und daß das nach unten gerichtete freie Ende des Haltespannbandes (22) an einem Träger des Schlittens (4) als Festlager befestigt ist, während das nach oben gerichtete freie Ende des Umlenkspannbandes (24) am oberen Teil einer vertikal geführten Druckstange (25) befestigt ist, die achsial auf den Druckkolben (13) ausgerichtet, mit ihrem unteren Ende auf das obere Ende der Kolbenstange des Druckkolbens (13) einwirkt.

13. Gerät nach Anspruch 12, **dadurch gekennzeichnet,** daß je zwei Haltespannbänder

(22,22') und zwei Umlenkspannbänder (24,24') vorgesehen sind, die jeweils spiegelbildlich zur horizontalen Längsachse des Waagebalkens angeordnet sind, wobei das freie Ende beider Haltespannbänder von einem unterhalb bzw. oberhalb der horizontalen Längsachse liegenden Träger (23) als Festlager gehalten wird und das freie Ende der beiden Umlenkspannbänder jeweils mit einem der beiden Kopfenden der Druckstange (25) verbunden ist.

14. Gerät nach Anspruch 13, **dadurch gekennzeichnet,** daß am Drehelement (31) zwei aus jeweils zwei Halte- und zwei Umlenkspannbändern bestehende Spannbandanordnungen (33,35 bzw. 34,36) befestigt sind, die auf einer zur horizontalen Längsachse des Waagebalkens (5) senkrecht stehenden horizontalen Querachse symmetrisch zur Mittelachse des Waagebalkens (5) angeordnet sind, wobei die einander entsprechenden freien Enden der Haltespannbänder jeweils vom selben Träger (37 bzw. 38) gehalten werden, während die einander entsprechenden freien Enden der Umlenkspannbänder jeweils an einem gemeinsamen oberen bzw. unteren Haltesteg (40 bzw. 41) befestigt sind und beide Haltestege (40,41) von einem die Druckstange bildenden Stützrohr (42) mit die Mittelachse des Waagebalkens (5) in vertikaler Richtung schneidende Längsachse gespannt gehalten werden.

15. Gerät nach einem der Ansprüche 11 bis 14, **dadurch gekennzeichnet,** daß das Drehelement (21) aus einem Flachstab mit rechteckförmigem Querschnitt besteht, dessen Breite dem horizontalem Abstand (a) von Halte- und Umlenkspannband (22,24) entspricht.

16. Gerät nach einem der Ansprüche 11 bis 14, **dadurch gekennzeichnet,** daß das Drehelement (21,31) aus einem Rundstab besteht, dessen Durchmesser dem horizontalem Abstand (a) von Halte- und Umlenkspannband (22,24) entspricht.

17. Gerät nach Anspruch 16 in Verbindung mit Anspruch 13 oder 14, **dadurch gekennzeichnet,** daß die jeweils zwei Haltespannbänder (22,22') und die jeweils zwei Umlenkspannbänder (24,24') wechselweise zu zwei einteiligen Spannbändern zusammengefaßt sind, die unmittelbar nebeneinander liegend am das Drehelement bildenden Rundstab (21,31) und diesen jeweils halb umschließend befestigt sind.

18. Gerät nach einem der Ansprüche 12 bis 17, **dadurch gekennzeichnet,** daß das untere Ende der Druckstange (12,42) mit einem eine Temperaturbremse aufweisenden Aufnahmekopf (44) für das obere Ende (45) der Druckkolbenstange versehen ist.

19. Gerät nach einem der Ansprüche 7 bis 18, **dadurch gekennzeichnet, daß** zur Durchführung von Messungen eine mit den verschiedenen Antriebseinrichtungen (2,3 bzw. 9,10) für das Verfahren des Waagebalkens (5) mit Wegstreckenüberwachung und das Verlagern des Prüfgewichtes (8) auf dem Waagebalken (5) gekoppelte Steuereinrichtung (STE) vorgesehen ist, die abhängig von eingegebenen Prüfparametern z.B. Füllstandshöhe, Prüfgewicht, Prüfart) und von den während einer Messung anfallenden Meßwerten z.B. zurückgelegte Wegstrecke) den Ablauf einer Messung selbsttätig steuert.

## Claims

1. Method of carrying out measurements permitting assessment of the flow behaviour of thermoplastics under given pressure and temperature conditions, granules of the thermoplastic to be tested being filled in a vertically upright, heatable test cylinder (PZ) and extruded into free space through a die (15) on the lower base of the test cylinder (PZ) by a pressure ram (13) loaded with given weights, characterised in that the loading of the pressure ram (13) with a given weight is brought about by moving a vertically moveable balance beam (5), which is pivotable about a pivot point and loaded by a test weight (8), displaceably attached on the balance beam (5), and which acts at a specifically given distance from its pivot point on the pressure ram (13), the mass acting on the pressure ram (13) being dependent on the position of the test weight (8) on the balance beam (5), in that the deflection of the balance beam (5) from the horizontal zero position is continuously monitored and in that, depending on the extent of the deflection of the balance beam (5) determined in each case, the moving rate upon lowering of the balance beam (5) is altered and/or the test weight (8) is shifted in order to bring the balance beam (5) loaded by the pressure ram (13) into the horizontal zero position.

2. Method according to Claim 1, characterised in that deflections of the balance beam (5), governed by differences between the respective moving rate of the balance beam (5) and the respective test-dependent lowering rate of the pressure ram (13) during an extruding operation, bring about an alteration of the moving rate if the test weight (8) is kept in a constant position on the balance beam (5) and bring about a shifting of the test weight (8) if the moving rate is kept constant.

3. Method according to Claim 1 or 2, characterised in that the moving rate of the balance beam (5) is also influenced indirectly by a shifting of the test weight (8) controllable independently of the deflection of the balance beam.

4. Method according to Claim 3, characterised in that the length of travel covered, starting from a vertical zero position of the movable balance beam (5), is continuously monitored, and in that depending on the filling level of the test cylinder (PZ) and the length of travel covered by the beginning of the given measuring length, the moving rate of the balance beam (5) is influenced in such a way by shifting the test weight (8) that the beginning of the given measuring length is reached at a given point in time after starting the balance beam (5) from the vertical zero position.

5. Method according to Claim 4, characterised in that, for determining the melt flow index (MFI) or the volume flow index (MVI), on reaching the beginning of the given measuring length, the test weight (8) is brought into the position producing the given ram loading and the respective travel/time ratio is subsequently measured.

6. Method according to Claim 4, characterised in that, on reaching the beginning of the given measuring length, the moving rate is kept constant according to a given value and the respective weight/travel ratio is measured.

7. Apparatus for carrying out the methods according to one of Claims 1 to 6, characterised - by a guide column (1) attached above the test cylinder (PZ) and having a vertically constantly movable carriage (4), - by devices (2, 3) for moving the carriage (4),
   - by a balance beam (5), pivotably suspended on the carriage (4) and having a pivot axis lying offset at a specifically given distance with respect to the axial centre of test cylinder (PZ) and pressure ram (13),
   - by a test weight (8), which is displaceably attached on the balance beam, loads the balance beam (5) and thereby presses it onto the extruding pressure ram (13),
- by devices (9, 10) for shifting the test weight (8) for the purpose of altering the mass loading the pressure ram (13),
- by devices (11) for monitoring the deflection of the balance beam (5) from the horizontal zero position and for optional controlling of the devices (2, 3) for moving the carriage (4) and/or of the devices (9, 10) for moving the test weight (8) dependently of the deflection of the balance beam (5) determined in each case.

8. Apparatus according to Claim 7, characterised in that stops are provided for limiting the deflections of the balance beam (5) upwards and downwards.

9. Apparatus according to Claim 7 or 8, characterised in that the devices (9, 10) for displacing the test weight (8) on the balance beam (5) comprise a stepping motor (10) and a drive spindle (9) with slight pitch and in that the pitch of the drive spindle (9), the number of steps for the full extent of displacement of the test weight (8), the mass of the test weight (8) and the effective beam lengths (a, 1) are matched in such a way that the loading of the pressure ram (13) is altered by a given unit of mass, for example 1 gram, with each step of the stepping motor (10).

10. Apparatus according to one of Claims 7 to 9, characterised in that, to compensate at least partially for the own weight of the balance beam (5), a counter weight (7) is attached to the balance beam (5).

11. Apparatus according to one of Claims 7 to 10, characterised in that the balance beam (5) is fastened to a freely suspended pivot element (21) held by taut strips (22, 24).

12. Apparatus according to Claim 11, characterised in that the pivot element (21) is held by at least one retaining strip (22) and one deflecting strip (24), which are both stressed in the vertical direction and are fastened at a given horizontal distance (a) to the pivot element (21) and in that the downwardly directed free end of the retaining strip (22) is fastened to a support of the carriage (4) as fixed bearing, while the upwardly directed free end of the deflecting strip (24) is fastened to the upper part of a vertically disposed pressure rod (25), which is aligned axially with the pressure ram (13), with its lower end on the upper end of the ram rod of the pressure ram (13).

13. Apparatus according to Claim 12, characterised in that in each case two retaining strips (22, 22') and two deflecting strips (24, 24') are provided, which are in each case arranged mirror-symmetrically with respect to the horizontal longitudinal axis of the balance beam, the free end of both retaining strips being held by a support (23) lying respectively underneath and above the horizontal longitudinal axis, as fixed bearings, and the free end of the two deflecting strips is in each case connected to one of the two head ends of the pressure rod (25).

14. Apparatus according to Claim 13, characterised in that fastened to the pivot element (31) are two taut strip arrangements (33, 35 and 34, 36 respectively), which in each case comprise two retaining strips and two deflecting strips and are arranged symmetrically with respect to the centre axis of the balance beam (5) on a horizontal transverse axis perpendicular to the horizon-tal longitudinal axis of the balance beam (5), the mutually corresponding free ends of the retaining strips being held in each case by the same support (37 and 38 respectively), while the mutually corresponding free ends of the deflecting strips are in each case fastened to a common upper and lower retaining bar (40 and 41 respectively) and the two retaining bars (40, 41) are kept tensioned by a supporting tube (42), forming the pressure rod and having a longitudinal axis intersecting the centre axis of the balance beam (5) in the vertical direction.

15. Apparatus according to one of Claims 11 to 14, characterised in that the pivot element (21) comprises a flat bar of rectangular cross-section, the width of which corresponds to the horizontal distance (a) between retaining strip (22) and deflecting strip (24).

16. Apparatus according to one of Claims 11 to 14, characterised in that the pivot element (21, 31) comprises a round bar, the diameter of which corresponds to the horizontal distance (a) between retaining strip (22) and deflecting strip (24).

17. Apparatus according to Claim 16 in conjunction with Claim 13 or 14, characterised in that the in each case two retaining strips (22, 22') and the in each case two deflecting strips (24, 24') are alternately combined to form two one-part taut strips, which, lying directly next to one another, are fastened to the round bar (21, 31) forming the pivot element, and in each case halfsurround the said bar.

18. Apparatus according to one of Claims 12 to 17, characterised in that the lower end of the pressure rod (12, 42) is provided with a receiving head (44), having a temperature brake, for the upper end (45) of the pressure ram rod.

19. Apparatus according to one of Claims 7 to 18, characterised in that, for performing measurements, there is provided a control device (STE), which is coupled to the various drive devices (2, 3 and 9, 10 respectively) for moving the balance beam (5), with length of travel monitoring, and shifting the test weight (8) on the balance beam (5) and which automatically controls the sequence of a measurement dependently of entered test parameters, for example filling level, test weight, type of test, and of measured values occurring during a measurement, for example length of travel covered.

**Revendications**

1. Procédé pour exécuter des mesures permettant l'évaluation du comportement de fluage de matières thermoplastiques dans des conditions prédéterminées de pression et de température, selon lequel on extrude un granulat de la matière plastique devant être contrôlée, qui remplit un cylindre vertical d'essai (PZ) pouvant être chauffé, au moyen d'un piston de compression (13), chargé par des poids prédéterminés, à travers une filière (15) située au niveau du fond inférieur du cylindre d'essai (PZ), à l'air libre, caractérisé par le fait qu'on charge le piston de compression (13) avec un poids prédéterminé au moyen du déplacement d'un fléau de balance (5) déplaçable verticalement, qui est chargé, de manière à pouvoir pivoter autour d'un centre de rotation, par un poids d'essai (8) installé de manière à être déplaçable sur le fléau de balance (5) et qui agit, à une distance prédéterminée de son centre de rotation, sur le piston de compression (13), la masse agissant sur le piston de compression (13) dépendant de la position du poids d'essai (8) sur le fléau de balance (5), que l'on contrôle la déviation du fléau de balance (5) à partir de la position nulle horizontale et qu'en fonction du degré de déviation respectivement établi du fléau de balance (5), on modifie la vitesse de déplacement lors de l'abaissement du fléau de balance (5) et/ou on décale le poids d'essai (8) afin d'amener le fléau de balance (5) chargé par le piston de compression (13), dans la position horizontale nulle.

2. Procédé suivant la revendication 1, caractérisé par le fait que des déviations du fléau de balance (8), dues à des différences entre la vitesse respective de déplacement du fléau de balance (5) et la vitesse respective d'abaissement, conditionnée par l'essai, du piston de compression (13) pendant une opération d'extrusion, provoquent une modification de la vitesse de déplacement, lorsqu'on maintient constante la position du poids d'essai (8) sur le fléau de balance (5), et un déplacement du poids d'essai (8) lorsqu'on maintient constante la vitesse de déplacement.

3. Procédé suivant la revendication 1 ou 2, caractérisé par le fait que la vitesse de déplacement du fléau de balance (5) est également influencée de façon indirecte par un décalage du poids d'essai (8), qui peut être commandé indépendamment de la déviation du fléau de balance.

4. Procédé suivant la revendication 3, caractérisé par le fait que l'on contrôle en permanence la section de trajet parcourue à partir d'une position nulle en hauteur du fléau de balance mobile (5), et qu'on influe sur la vitesse de déplacement du fléau de balance (5), en fonction de la hauteur de remplissage du cylindre d'essai (PZ) et de la section de trajet parcourue au début de la section de mesure prédéterminée, au moyen d'un déplacement du point d'essai (8) de manière que le début de la section de mesure prédéterminée soit atteint à un instant prédéterminé après le départ du fléau de balance (5) à partir de la position nulle en hauteur.

5. Procédé suivant la revendication 4, caractérisé par le fait que pour déterminer l'indice de fusion (MFI) ou l'indice volumique de fluage (MVI), le poids d'essai (8) est amené dans la position provoquant l'application d'une charge prédéteminée au piston, lorsque le début de la section de mesure est atteinte, et qu'ensuite on mesure le rapport respectif trajet/temps.

6. Procédé suivant la revendication 4, caractérisé par le fait que lorsque le début de la section de mesure pré-déterminée est atteint, la vitesse de déplacement est maintenue constante conformément à une valeur prédéterminée, et qu'on mesure le rapport respectif poids/trajet.

7. Appareil pour la mise en oeuvre du procédé suivant l'une des revendications 1 à 6, caractérisé - par une colonne de guidage (1) installée au-dessus du cylindre d'essai (PZ) et comportant un chariot (4) continûment déplaçable en hauteur, - des dispositifs (2,3) servant à déplacer le chariot (4), - un fléau de balance (5) suspendu de manière à pouvoir tourner sur le chariot (4) et comportant un axe de rotation décalé d'une distance prédéterminée de façon fixe par rapport au centre de l'axe du cylindre d'essai (PZ) et du piston de compression (13), - un poids d'essai (8), monté de manière à être déplaçable sur le fléau de balance (5), charge cette dernière et la repousse de ce fait contre le piston de compression (13) réalisant l'extrusion, - des dispositifs (9,10) servant à décaler le poids d'essai (8) en vue de modifier la masse chargeant le piston de compression (13), - des dispositifs (11) servant à contrôler la déviation du fléau de balance (5) à partir de la position nulle horizontale et à commander au choix les dispositifs (2,3) pour déplacer le chariot (4) et/ou les dispositifs (9,10) servant à décaler le poids d'essai (8), en fonction de la déviation respectivement déterminée du fléau de balance (5).

8. Appareil suivant la revendication 7, caractérisé par le fait que des butées sont prévues, en haut et en bas, pour limiter les excursions du fléau de balance (5).

9. Appareil suivant la revendication 7 ou 8, caractérisé par le fait que les dispositifs (9,10) servant à décaler le poids d'essai (8) sur le fléau de balance (5) sont constitués par un moteur pas-à-pas (10) et par une broche d'entraînement (9) comportant un pas réduit, et que le nombre des pas pour la course complète de déplacement du poids d'essai (8), la masse de ce poids d'essai (8) et les longueurs actives (a,l) de la poutre sont réglés les uns sur les autres de manière que, pour chaque pas du moteur pas-à-pas <10), la charge du piston de compression (13) est modifiée d'une unité de masse prédéterminée, par exemple 1 gramme.

10. Appareil suivant l'une des revendications 7 à 9, caractérisé par le fait qu'un contrepoids (7) est installé sur le fléau de balance (5) au moins pour compenser partiellement la charge propre du fléau de balance (5).

11. Appareil suivant l'une des revendications 7 à 10, caractérisé par le fait que le fléau de balance (5) est fixé sur un élément rotatif (21) oscillant librement, qui est maintenu par des bandes de serrage (22,24).

12. Appareil suivant la revendication Il, caractérisé par le fait que l'élément rotatif (21) est maintenu par au moins une bande de serrage de maintien (22) et une bande de serrage de renvoi (24), qui sont soumises toutes deux à une contrainte dans la direction verticale et sont fixées sur l'élément rotatif (22), à une distance horizontale (a) prédéterminée, et que l'extrémité libre, dirigée vers le bas, de la bande de serrage de maintien (22) est fixée sur un support du chariot (4) formant appui fixe, tandis que l'extrémité limite, tournée vers le haut, de la bande de serrage de renvoi (24) est fixée sur la partie supérieure d'une barre de compression (25) guidée verticalement, qui est alignée axialement sur le piston de compression (13) et agit par son extrémité inférieure sur l'extrémité supérieure de la tige du piston de compression (13).

13. Appareil suivant la revendication 12, caractérisé par le fait qu'il est prévu respectivement deux bandes de serrage de maintien (22,22') et deux bandes de serrage de renvoi (24,24'), disposées respectivement symétriquement par rapport à l'axe horizontal longitudinal du fléau de balance, l'extrémité libre des deux bandes de serrage de maintien étant maintenue par un support (23) situé au-dessous ou au-dessus de l'axe longitudinal horizontal en tant qu'appui fixe, et l'extrémité libre des deux bandes de serrage de renvoi étant reliée respectivement à l'une des deux extrémités de tête de la barre de compression (25).

14. Appareil suivant la revendication 13, caractérisé par le fait que sur l'élément rotatif (31) sont fixés deux dispositifs à bandes de serrage (33 et 35 ou 34,36), qui sont constitués respectivement par deux bandes de serrage de maintien et deux bandes de serrage de renvoi et sont disposés sur un axe transversal horizontal perpendiculaire à l'axe longitudinal horizontal du fléau de balance (5), symétriquement par rapport à l'axe médian du fléau de balance (5), les extrémités libres, qui se correspondent, des bandes de serrage de maintien étant maintenues respectivement par le même support (37 ou 38), tandis que les extrémités libres, qui se correspondent, des bandes de serrage de renvoi sont fixées respectivement au niveau d'une barrette de maintien commune supérieure ou inférieure (40 ou 41), et que les deux barrettes de maintien (40,41) sont maintenues serrées par un tube de support (42) constituant la barre de compression, et possédant un axe longitudinal recoupant l'axe médian du fléau de balance (5) dans la direction verticale.

15. Appareil suivant l'une des revendications 11 à 14, caractérisé par le fait que l'élément rotatif (21) est constitué par un barreau plat possédant une section transversale rectangulaire, dont la largeur correspond à la distance horizontale (a) entre la bande de serrage de maintien et la bande de serrage de renvoi (22,24).

16. Appareil suivant l'une des revendications 11 à 14, caractérisé par le fait que l'élément rotatif (21,31) est constitué par un barreau cylindrique, dont le diamètre correspond à la distance horizontale (a) entre la bande de serrage de maintien et la bande de serrage de renvoi (22,24).

17. Appareil suivant revendication 16, en liaison avec la revendication 13 ou 14, caratérisé par le fait que les deux bandes de serrage de maintien respectives (22,22') et les deux bandes de serrage de renvoi respectives (24,24') sont réunies alternativement pour former deux bandes de serrage d'un seul tenant, qui sont fixées, directement côte-à-côte, sur la barre cylindrique (21,31) constituant l'élément rotatif, de manière à entourer la moitié de cette barre.

18. Appareil suivant l'une des revendications 12 à 17, caractérisé par le fait que l'extrémité inférieure de la barre de compression (12,42) comporte une tête de réception (44), qui comporte un frein thernique, pour l'extrémité supérieure (45) de la tige du piston de compression.

19. Appareil suivant l'une des revendications 7 à 18, caractérisé par le fait que, pour la mise en oeuvre de mesures, il est prévu un dispositif de commande (STE), qui est accouplé aux différents dispositifs d'entraînement (2,3 ou 9,10), servant à déplacer le fléau de balance (5) avec un contrôle du trajet de déplacement et à décaler le poids d'essai (8) sur le fléau de balance (5), et qui commande de façon automatique l'exécution d'une mesure en fonction de paramètres de contrôle introduits, par exemple la hauteur du niveau de remplissage, le poids d'essai, le type d'essai et des valeurs de mesure obtenues lors d'une mesure, par exemple le trajet de déplacement parcourue.

EP 0 266 753 B1

FIG 1

FIG 3

FIG 2

FIG 4

FIG 5

## FIG 6